# EUROPÄISCHE PATENTANMELDUNG

(11) **EP 3 686 699 A1**
(43) Veröffentlichungstag der Anmeldung: **29.07.2020**
(21) Anmeldenummer: 19153778.6
(22) Anmeldetag: 25.01.2019
(51) Int. Cl.: G05B 19/418, G06Q 50/04

(54) **VERFAHREN UND VORRICHTUNG ZUR PRÜFUNG EINER FUNKTIONALITÄT EINES PRODUKTS**

(71) Anmelder: Siemens Aktiengesellschaft, 80333 München (DE)
(72) Erfinder: Bergs, Christoph, 80336 München (DE); Zietsch, Jakob, 80809 München (DE)

(57) **Zusammenfassung**

Die Erfindung umfasst ein computerimplementiertes Verfahren und eine Vorrichtung zur Prüfung einer Funktionalität eines Produkts (P). Mittels mindestens eines Sensors (S) wird eine Struktur des Produkts (P) erfasst (S1) und auf Basis der Sensordaten wird ein produktspezifisches Modell (PM) erzeugt (S2). Es wird ein computergestütztes Simulationsmodell (SM) für das Produkt (P) eingelesen (S3), wobei das computergestützte Simulationsmodell einen Sollzustand des Produkts umfasst. Durch einen Vergleich des produktspezifischen Modells (PM) mit dem computergestützten Simulationsmodell (SM) wird eine Abweichung (D) des Produkts vom Sollzustand bestimmt (S4) und das computergestützte Simulationsmodell (SM) unter Berücksichtigung der bestimmten Abweichung (D) rekonfiguriert. Durch eine computergestützte Simulation mittels des rekonfigurierten computergestützten Simulationsmodells (SM) wird eine Funktionalität des Produkts (P) geprüft (S6) und das Prüfergebnis ausgegeben (S7).

## Beschreibung

Die Erfindung betrifft ein computerimplementiertes Verfahren und eine Vorrichtung zur Prüfung einer Funktionalität eines Produkts, insbesondere einer Prüfung parallel zu einem Fertigungsprozess des Produkts.

Bei einer Fertigung von Produkten, insbesondere bei einer Serienfertigung, wird in der Regel mittels Sensoren überprüft, ob ein gefertigtes Produkt vorgegebenen Qualitätsanforderungen genügt. So kann insbesondere eine automatische Überprüfung der Qualität eines Produkts realisiert werden. Abweichungen von einem Sollzustand des gefertigten Produkts können mittels Sensoren, wie z.B. Kameras, erkannt werden. Ausschussprodukte werden aussortiert, wobei häufig keine Unterscheidung zwischen nicht funktionsfähigen Produkten und mangelhaften, aber trotzdem funktionsfähigen Produkten gemacht wird. Die aussortierten Produkte können anschließend inspiziert werden, wobei insbesondere eine Funktionalität bzw. Nutzbarkeit des Produkts getestet werden kann.

Es ist eine Aufgabe der vorliegenden Erfindung die Ausschussrate bei einer Fertigung zu verringern.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zur Prüfung einer Funktionalität eines Produkts, mit den folgenden Verfahrensschritten:
- Erfassen einer Struktur des Produkts mittels mindestens eines Sensors und Ausgeben der Sensordaten,
- Erzeugen eines produktspezifischen Modells auf Basis der Sensordaten,
- Einlesen eines computergestützten Simulationsmodells für das Produkt, wobei das computergestützte Simulationsmodell einen Sollzustand des Produkts umfasst,
- Bestimmen einer Abweichung des Produkts vom Sollzustand durch einen Vergleich des produktspezifischen Modells mit dem computergestützten Simulationsmodell,
- Rekonfigurieren des computergestützten Simulationsmodells unter Berücksichtigung der bestimmten Abweichung,
- Prüfen einer Funktionalität des Produkts durch eine computergestützte Simulation mittels des rekonfigurierten computergestützten Simulationsmodells
   und
- Ausgeben des Prüfergebnisses.

Das Verfahren kann vorzugsweise bei einer Serienproduktion eingesetzt werden. Insbesondere kann das Verfahren parallel, vorzugsweise, ohne in die Fertigung einzugreifen oder den Fertigungsprozess zu stören, ausgeführt werden.

Ein Sensor kann beispielsweise eine Kamera, eine IR-Kamera, ein Röntgendetektor oder ein Ultraschalldetektor sein. Insbesondere können mehr als ein Sensor genutzt werden, um beispielsweise ein dreidimensionales Bild des Produkts zu erfassen. In anderen Worten, Sensordaten können beispielsweise zwei- oder dreidimensionale Bilddaten umfassen. Sensordaten können außerdem insbesondere eine Tiefeninformation über die Struktur des Produkts umfassen. Die Sensordaten können insbesondere während oder nach der Fertigstellung des Produkts erfasst und ausgegeben werden. Es kann die Oberfläche und/oder die dreidimensionale Struktur des Produkts mittels des Sensors erfasst werden. Bei einer Serienproduktion können vorzugsweise von jedem gefertigten Produkt oder von einer Stichprobe von Produkten Sensordaten erfasst werden.

Anhand der Sensordaten kann ein produktspezifisches Modell, vorzugsweise ein zwei- oder dreidimensionales Modell, generiert werden. Das produktspezifische Modell umfasst insbesondere Eigenschaften, Größen, Merkmale des jeweiligen Produkts. Vorzugsweise kann das produktspezifische Modell computerlesbar sein.

Ein computergestütztes Simulationsmodell des Produkts kann insbesondere ein Simulationsmodell für die Produktserie sein und insbesondere derart eingerichtet sein, dass es einen Sollzustand nach Fertigstellung des Produkts beschreibt. Das computergestützte Simulationsmodell kann insbesondere zwei- oder dreidimensional konfiguriert sein. Das computergestützte Simulationsmodell kann insbesondere derart aufgesetzt sein, dass eine Echtzeit-Simulation durchgeführt werden kann. Vorzugsweise kann eine Dimensionsreduktion des computergestützten Simulationsmodells durchgeführt werden, um eine Echtzeit-Simulation auf einem Edge-Gerät durchzuführen.

Durch Vergleichen des computergestützten Simulationsmodells mit dem produktspezifischen Modell kann eine Abweichung des Sollzustands des jeweiligen Produkts ermittelt werden. Insbesondere kann eine Abweichung des Produkts von einem Sollzustand bereits mittels eines weiteren Detektors bereits detektiert sein. Der Vergleich des computergestützten Simulationsmodells mit dem produktspezifischen Modell kann insbesondere die genaue Position und weitere Charakteristiken der Abweichung ermitteln. Insbesondere umfasst der Vergleich der Modelle einen Vergleich von Parametern, die das jeweilige Produkt beschreiben.

Eine Abweichung kann ein Mangel, Defekt oder Fehler, wie z.B. ein Produktions- bzw. Herstellungsfehler, ein Materialfehler oder ein Formfehler sein. Die ermittelte Abweichung kann insbesondere in das computergestützte Simulationsmodell übernommen werden. Beispielsweise können Parameter des computergestützten Simulationsmodells gemäß der Abweichung angepasst werden.

Mittels des rekonfigurierten computergestützten Simulationsmodells kann eine vorgegebene Funktionalität des Produkts getestet werden. Neben einer Funktionalität kann vorzugsweise auch oder alternativ eine Nutzbarkeit getestet werden.

Es kann eine Simulation, vorzugsweise eine Echtzeit-Simulation parallel zum Fertigungsprozess, ausgeführt werden. Die Funktionalität des Produkts kann insbesondere für den Sollzustand definiert sein. Die Funktionalität kann beispielsweise im computergestützten Simulationsmodell modelliert sein. Mittels der Ausführung des computergestützten Simulationsmodells kann geprüft werden, ob eine Funktionalität und/oder Nutzbarkeit des Produkts, das eine Abweichung aufweist, gegeben ist. Das Prüfergebnis kann eine Angabe über die Funktionalität umfassen.

Es ist ein Vorteil der vorliegenden Erfindung, dass mittels einer computergestützten Simulation eines mangelhaften Produkts dessen Funktionalität getestet werden kann, insbesondere bevor das Produkt wegen dieses Mangels aussortiert oder selektiert wird. Dies erlaubt insbesondere Produkte mit Mängeln zu identifizieren, deren Funktion durch die Mängel nicht beeinträchtigt ist. Derart kann insbesondere die Ausschussrate reduziert werden.

In einer vorteilhaften Ausführungsform des computerimplementierten Verfahrens kann das computergestützte Simulationsmodell rekonfiguriert werden, wenn die bestimmte Abweichung au-βerhalb eines vorgegebenen Toleranzbereiches liegt.

Vorzugsweise können lediglich diejenigen Abweichungen bestimmt werden, die außerhalb eines vorgegebenen Toleranzbereichs liegen. Beispielsweise kann der Wert eines Parameters eines Modells außerhalb einer vorgegebenen Toleranzgrenze liegen. Beispielsweise können geringe Abweichung in Größe oder Form des Produkts toleriert werden.

In einer vorteilhaften Ausführungsform des computerimplementierten Verfahrens können Koordinaten und/oder Eigenschaften und/oder Größenangaben der Abweichung ermittelt und zum Rekonfigurieren des computergestützten Simulationsmodells genutzt werden.

Vorzugsweise kann anhand des Vergleichs des computergestützten Simulationsmodells mit dem produktspezifischen Modell die Abweichungen derart charakterisiert werden, dass eine Parametrisierung zur Rekonfiguration des computergestützten Simulationsmodells möglich ist.

In einer vorteilhaften Ausführungsform des computerimplementierten Verfahrens kann die Funktionalität des Produkts durch die computergestützte Simulation unter Berücksichtigung einer vorgegebenen Einsatzbedingung für das Produkt geprüft werden.

Einsatzbedingungen des Produkts können beispielsweise auch Betriebs- oder Weiterverarbeitungsbedingungen sein. Eine Einsatzbedingung ist vorzugsweise für den Sollzustand des Produkts definiert.

In einer vorteilhaften Ausführungsform des computerimplementierten Verfahrens kann das Prüfergebnis einer eindeutigen Identifikationsnummer des Produkts zugeordnet werden.

Das Prüfergebnis, z.B. eine Angabe über die Funktionsfähigkeit eines mangelhaften Produkts, kann z.B. mit einer Identifikationsnummer, die dem Produkt zugeordnet ist, verknüpft werden. So kann insbesondere die Information über die Funktionalität des Produkts eindeutig dokumentiert werden.

In einer vorteilhaften Ausführungsform des computerimplementierten Verfahrens kann das produktspezifische Modell als Datenstruktur ausgegeben und der eindeutigen Identifikationskennung des Produkts zugeordnet werden.

Auf diese Weise kann das produktspezifische Modell eindeutig dem Produkt zugeordnet werden. Beispielsweise kann das produktspezifische Modell in einer Datenbank gespeichert und mittels der Identifikationskennung abgerufen werden.

In einer vorteilhaften Ausführungsform des computerimplementierten Verfahrens kann das Produkt abhängig vom Prüfergebnis als verwendbar oder als Ausschuss sortiert wird.

Insbesondere können derart Produkte identifiziert werden, die einen Mangel aufweisen, aber trotzdem funktionsfähig sind. Als Ausschuss können insbesondere lediglich diejenigen mangelhaften Produkte deklariert werden, deren Funktionsfähigkeit mittels der Simulation nicht bestätigt werden kann. Bei einer positiven Evaluation der Funktionalität mittels der Simulation kann das Produkt verwendet werden.

Gemäß einem zweiten Aspekt betrifft die Erfindung eine Vorrichtung zur Prüfung einer Funktionalität eines Produkts, umfassend mindestens einen Sensor und einen Prozessor, wobei
- der mindestens eine Sensor derart eingerichtet ist, eine Struktur des Produkts zu erfassen,
- der eine Prozessor derart eingerichtet ist,
   - ein produktspezifisches Modell auf Basis der Sensordaten zu erzeugen,
   - ein computergestütztes Simulationsmodell für das Produkt, wobei das computergestützte Simulationsmodell einen Sollzustand des Produkts umfasst, einzulesen,
   - eine Abweichung des Produkts vom Sollzustand durch einen Vergleich des produktspezifischen Modells mit dem computergestützten Simulationsmodell zu bestimmen,
   - das computergestützte Simulationsmodell unter Berücksichtigung der bestimmten Abweichung zu rekonfigurieren,
   - eine Funktionalität des Produkts durch eine computergestützte Simulation mittels des rekonfigurierten computergestützten Simulationsmodells zu prüfen und das Prüfergebnis auszugeben.

Die Vorrichtung kann vorzugsweise mit einer Produktionsmaschine bzw. -anlage gekoppelt oder in deren Nähe installiert sein.

Unter einem "Prozessor" können im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, ein Server etc. handeln.

In einer vorteilhaften Ausführungsform kann die Vorrichtung mit einer Sortiereinrichtung gekoppelt sein und die Sortiereinrichtung derart eingerichtet ist, das Produkt abhängig vom Prüfergebnis als verwendbar oder als Ausschuss zu sortieren.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, das Verfahren und/oder zumindest teilweise die Schritte eines Verfahrens auszuführen und ein computerlesbares Speichermedium mit einem erfindungsgemäßen Computerprogrammprodukt.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Figuren beispielhaft dargestellt und werden anhand der nachfolgenden Beschreibung näher erläutert. Es zeigen:
Fig. 1: ein Ablaufdiagramm eines erfindungsgemäßen Verfahrens; und
Fig. 2: eine schematische Darstellung einer erfindungsgemäßen Vorrichtung.

Einander entsprechende Gegenstände sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

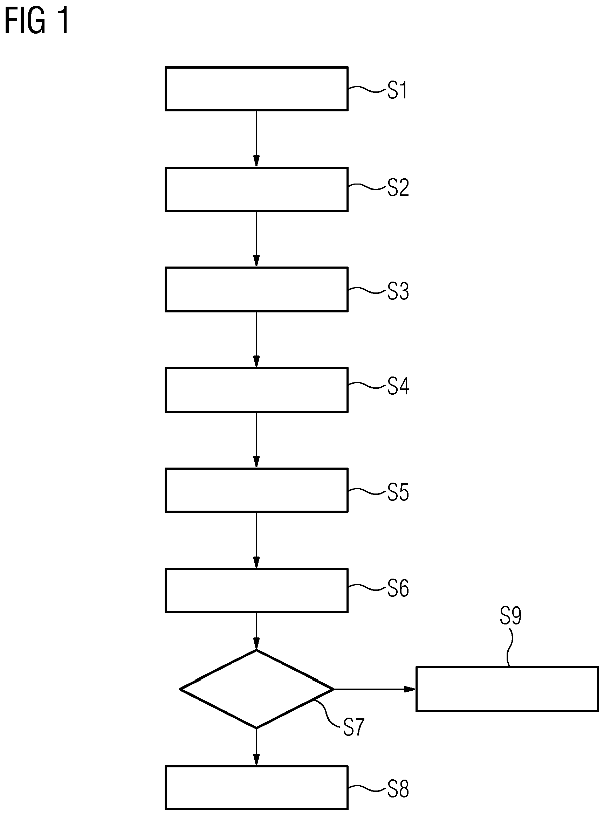

Figur 1 zeigt ein Ablaufdiagramm eines erfindungsgemäßen computerimplementierten Verfahrens zur Prüfung einer Funktionalität eines Produkts. Ein Produkt kann beispielsweise ein Werkstück oder ein Produkt der Additiven Fertigung sein. Das Verfahren kann insbesondere bei einer Serienfertigung von Produkten eingesetzt werden. Beispielsweise kann das Verfahren parallel zur Fertigung durchgeführt werden, d.h. parallel zum Fertigungsprozess kann die Prüfung der Funktionalität eines gefertigten Produkts durchgeführt werden. Die Prüfung mittels Simulation kann insbesondere während der Fertigung oder anschließend an die Fertigung durchgeführt werden.

Im ersten Schritt S1 des Verfahrens wird eine Struktur, insbesondere die dreidimensionale Struktur, des Produkts mit mindestens einem Sensor erfasst. Beispielsweise kann der Sensor eine Kamera sein. Um eine dreidimensionale Struktur zu erfassen, können insbesondere mehrere Sensoren genutzt werden. Die Sensordaten des mindestens einen Sensors werden an einen Prozessor übermittelt.

Im nächsten Schritt S2 wird anhand der Sensordaten ein produktspezifisches Modell des Produkts angefertigt. Beispielsweise kann das produktspezifische Modell auch vordefiniert sein und kann anhand der Sensordaten produktspezifisch angepasst werden. Das Modell ist vorzugsweise computerlesbar bzw. computergestützt, wie z.B. ein dreidimensionales CAD-Modell (CAD, engl. Computer-aided Design). Das produktspezifische Modell wird insbesondere abhängig von den Sensordaten erzeugt, d.h. es kann individuell für jedes Produkt erzeugt werden. Insbesondere können Parameter und/oder Variablen des produktspezifischen Modells anhand der Sensordaten produktspezifisch angepasst werden. Vorzugsweise wird das produktspezifische Modell in einer Datenstruktur gespeichert und derart für die nächsten Verfahrensschritte bereitgestellt. Vorzugsweise wird die Datenstruktur einer eindeutigen Identifikationskennung, wie z.B. einer Identifikationsnummer, des Produkts zugeordnet.

Im nächsten Schritt S3 wird ein computergestütztes Simulationsmodell des Produkts bereitgestellt und eingelesen. Das computergestützte Simulationsmodell kann insbesondere ein physikalisches Simulationsmodell sein, das insbesondere einen Sollzustand des Produkts umfasst. In anderen Worten, das computergestützte Simulationsmodell bildet einen Produktzustand, vorzugsweise den gewünschten Produktendzustand, ab. Das computergestützte Simulationsmodell kann insbesondere nicht produktspezifisch, sondern für eine Produktserie gültig, sein.

Im nächsten Schritt S4 wird anhand des bereitgestellten produktspezifischen Modells und des computergestützten Modells eine Abweichung des Produkts vom Sollzustand ermittelt. Insbesondere wird ein Vergleich der beiden Modelle durchgeführt, wie z.B. eine Differenz mindestens eines Parameters der jeweiligen Modelle gebildet, um eine Abweichung, wie z.B. einen Fehler, zu bestimmen. Die Abweichung kann durch Koordinaten und Eigenschaften, wie z.B. Größe oder Tiefe, charakterisiert werden. Die Daten der Abweichung können gespeichert und bereitgestellt werden. Vorzugsweise wird eine Abweichung registriert, die außerhalb eines vorgegebenen Toleranzbereichs liegt. Ein Toleranzbereich kann beispielsweise für einen vorgegebenen Parameter der jeweiligen Modelle gelten, wie z.B. eine Größen- oder Volumenangabe des Produkts.

Im nächsten Schritt S5 wird das computergestützte Simulationsmodell derart rekonfiguriert, dass es die ermittelte Abweichung abbildet. Dazu können beispielsweise die Koordinaten und Charakteristiken der Abweichung zur Parametrisierung des computergestützten Simulationsmodells genutzt werden. Beispielsweise kann ein Produkt eine Größe aufweisen, die unter Berücksichtigung eines Toleranzbereichs nicht einer Vorgabe entspricht. Das Messergebnis eines Sensors, z.B. eine Größenangabe, kann als Parameterwert zur Rekonfiguration des computergestützten Simulationsmodells übergeben werden. Insbesondere kann das computergestützte Simulationsmodell derart an die Charakteristiken des jeweiligen Produkts angepasst werden. Das computergestützte Simulationsmodell wird demnach produktspezifisch konfiguriert, d.h. es umfasst vorzugsweise auch die Charakteristiken der detektierten Abweichung.

Im nächsten Schritt S6 kann mittels des rekonfigurierten computergestützten Simulationsmodells eine computergestützte Simulation ausgeführt werden. Mittels der Simulation kann eine Funktionalität und/oder Nutzbarkeit des Produkts unter vorgegebenen Einsatzbedingungen simuliert und damit geprüft werden. In anderen Worten, das rekonfigurierte computergestützte Simulationsmodell kann über einen Zeitraum ausgewertet werden, um insbesondere eine vorgegebene Funktionalität des Produkts zu testen. Die Funktionalität des Produkts, die mittels Simulation getestet werden soll, kann vorzugsweise vorab im definiert sein.

Das Prüfergebnis aus der Simulation wird anschließend ausgegeben, Schritt S7. Das Prüfergebnis kann insbesondere mit einer eindeutigen Identifikationsnummer des Produkts gekoppelt werden. Beispielsweise kann das Prüfergebnis eindeutig dem Produkt zugeordnet und gespeichert werden.

Mittels der Simulation kann beispielsweise ermittelt werden, dass trotz einer Abweichung von einem Sollzustand oder einem Sollwert, das jeweilige Produkt funktionsfähig ist, Schritt S8. Beispielsweise kann ein Produkt der Additiven Fertigung einen Oberflächenfehler aufweisen, der die Funktionalität bei vorgegebenen Einsatzbedingungen des Produkts nicht beeinträchtigt. Die Simulation kann alternativ ergeben, dass das Produkt aufgrund der Abweichung als Ausschuss deklariert wird, Schritt S9.

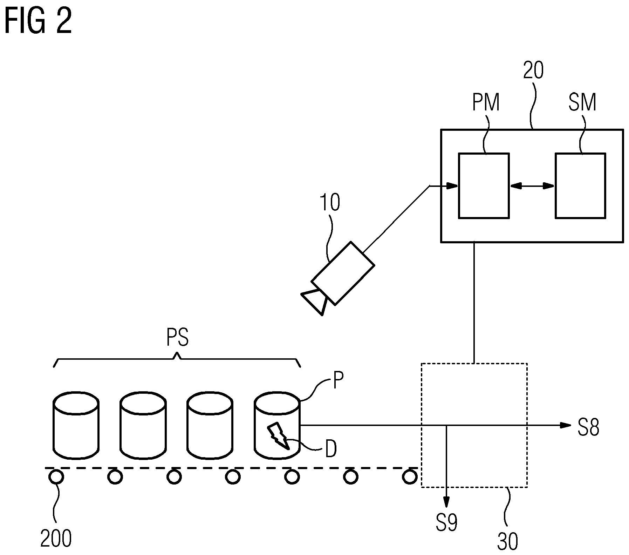

Figur 2 zeigt in schematischer Blockdarstellung eine erfindungsgemäße Vorrichtung zur Prüfung einer Funktionalität eines Produkts P, umfassend mindestens einen Sensor 10 und einen Prozessor 20. Die Vorrichtung ist vorzugsweise mit einer Sortiereinrichtung 30 gekoppelt. Die Vorrichtung kann für eine Serienproduktion eingerichtet sein. Figur 2 zeigt schematisch ein Förderband 200, auf dem die Erzeugnisse PS einer Serienproduktion transportiert werden. Die Erzeugnisse bzw. Produkte PS sind vorzugsweise gleichartig, wobei, z.B. aufgrund eines Produktionsfehlers, Mängel oder Abweichungen D an mindestens einem der Produkte P auftreten können. Eine Abweichung D kann insbesondere bereits durch einen weiteren Sensor erkannt worden sein (nicht dargestellt). Mittels des Sensors 10 der erfindungsgemäßen Vorrichtung werden Sensordaten des Produkts P aufgenommen. Der Sensor 10 erfasst vorzugsweise von jedem oder einer Auswahl der Produkte PS Sensordaten, die dazu geeignet sind, ein produktspezifisches Modell PM zu erstellen. Der mindestens eine Sensor 10 kann beispielsweise eine Kamera, ein Ultraschallmessgerät oder ein Röntgendetektor sein und entsprechend Oberflächen- und/oder Tiefeninformationen der Struktur, d.h. der Größe, Form, Oberflächenstruktur, etc., des Produkts P ermitteln.

Die Sensordaten werden an den Prozessor 20 übermittelt. Der Prozessor 20 ist derart eingerichtet, eine Abweichung D des Produkts P von einem vorgegebenen Sollzustand des Produkts zu ermitteln. Dazu wird aus den erfassten Sensordaten ein produktspezifisches Modell PM erstellt und mit einem bereitgestellten computergestützten Simulationsmodell SM für die Produkte PS verglichen. Insbesondere können die Koordinaten im Koordinatensystem des Produkts und/oder Eigenschaften und/oder Größenangaben der Abweichung D ermittelt werden. Auf Basis dieser Angaben wird das computergestützte Simulationsmodell SM produktspezifisch parametrisiert, wobei insbesondere die Abweichung D modelliert wird. In anderen Worten, die Simulationsparameter des computergestützten Simulationsmodells SM werden derart angepasst, dass mit dem computergestützten Simulationsmodell SM das mangelhafte Produkt P simuliert werden kann.

Mittels des rekonfigurierten Simulationsmodells SM kann im Prozessor 20 eine computergestützte Simulation des mangelhaften Produkts P ausgeführt werden, um eine Funktionsfähigkeit gemäß vorgegebener Einsatzbedingungen des Produkts zu prüfen. Einsatzbedingungen können beispielsweise als Randbedingungen formuliert sein.

Das Prüfergebnis, d.h. eine Angabe über die Funktionsfähigkeit und/oder Verwendbarkeit des mangelhaften Produkts P trotz bzw. aufgrund der Abweichung D, kann an die Sortiereinrichtung 30 übermittelt werden. Die Sortiereinrichtung 30 sortiert das Produkt, abhängig vom Prüfergebnis, als verwendbar S8 oder als Ausschuss S9. Das Prüfergebnis und/oder das produktspezifische Modell PM, als Datenstruktur, kann einer eindeutigen Identifikationskennung des Produkts zugeordnet werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zur Prüfung einer Funktionalität eines Produkts (P), mit den folgenden Verfahrensschritten:
- Erfassen (S1) einer Struktur des Produkts (P) mittels mindestens eines Sensors (S) und Ausgeben der Sensordaten,
- Erzeugen (S2) eines produktspezifischen Modells (PM) auf Basis der Sensordaten,
- Einlesen (S3) eines computergestützten Simulationsmodells (SM) für das Produkt (P), wobei das computergestützte Simulationsmodell (SM) einen Sollzustand des Produkts umfasst,
- Bestimmen (S4) einer Abweichung (D) des Produkts vom Sollzustand durch einen Vergleich des produktspezifischen Modells (PM) mit dem computergestützten Simulationsmodell,
- Rekonfigurieren (S5) des computergestützten Simulationsmodells (SM) unter Berücksichtigung der bestimmten Abweichung (D),
- Prüfen (S6) einer Funktionalität des Produkts (P) durch eine computergestützte Simulation mittels des rekonfigurierten computergestützten Simulationsmodells (SM)
und
- Ausgeben des Prüfergebnisses (S7).

2. Computerimplementiertes Verfahren nach Anspruch 1, wobei das computergestützte Simulationsmodell rekonfiguriert wird, wenn die bestimmte Abweichung (D) außerhalb eines vorgegebenen Toleranzbereiches liegt.

3. Computerimplementiertes Verfahren nach einem der vorhergehenden Ansprüche, wobei Koordinaten und/oder Eigenschaften und/oder Größenangaben der Abweichung (D) ermittelt und zum Rekonfigurieren des computergestützten Simulationsmodells (SM) genutzt werden.

4. Computerimplementiertes Verfahren nach einem der vorhergehenden Ansprüche, wobei die Funktionalität des Produkts durch die computergestützte Simulation unter Berücksichtigung einer vorgegebenen Einsatzbedingung für das Produkt (P) geprüft wird.

5. Computerimplementiertes Verfahren nach einem der vorhergehenden Ansprüche, wobei das Prüfergebnis einer eindeutigen Identifikationskennung des Produkts zugeordnet wird.

6. Computerimplementiertes Verfahren nach einem der vorhergehenden Ansprüche, wobei das produktspezifische Modell (PM) als Datenstruktur ausgegeben und der eindeutigen Identifikationskennung des Produkts zugeordnet wird.

7. Computerimplementiertes Verfahren nach einem der vorhergehenden Ansprüche, wobei das Produkt (P) abhängig vom Prüfergebnis als verwendbar (S8) oder als Ausschuss (S9) sortiert wird.

8. Vorrichtung zur Prüfung einer Funktionalität eines Produkts, umfassend mindestens einen Sensor (10) und einen Prozessor (20), wobei
- der mindestens eine Sensor (10) derart eingerichtet ist, eine Struktur des Produkts (P) zu erfassen,
- der eine Prozessor (20) derart eingerichtet ist,
- ein produktspezifisches Modell (PM) auf Basis der Sensordaten zu erzeugen,
- ein computergestütztes Simulationsmodell (SM) für das Produkt (P), wobei das computergestützte Simulationsmodell (SM) einen Sollzustand des Produkts umfasst, einzulesen,
- eine Abweichung (D) des Produkts vom Sollzustand durch einen Vergleich des produktspezifischen Modells (PM) mit dem computergestützten Simulationsmodell (SM) zu bestimmen,
- das computergestützte Simulationsmodell (SM) unter Berücksichtigung der bestimmten Abweichung (D) zu rekonfigurieren,
- eine Funktionalität des Produkts (P) durch eine computergestützte Simulation mittels des rekonfigurierten computergestützten Simulationsmodells (SM) zu prüfen und das Prüfergebnis auszugeben.

9. Vorrichtung nach Anspruch 8, wobei die Vorrichtung mit einer Sortiereinrichtung (30) gekoppelt ist und die Sortiereinrichtung (30) derart eingerichtet ist, das Produkt (P) abhängig vom Prüfergebnis als verwendbar oder als Ausschuss zu sortieren.

10. Computerprogrammprodukt eingerichtet zum Ausführen eines Verfahrens nach einem der Ansprüche 1 bis 7.

11. Computerlesbares Speichermedium mit einem Computerprogrammprodukt nach Anspruch 10.
